# EUROPEAN PATENT APPLICATION

(11) **EP 4 715 524 A1**
(43) Date of publication of application: **25.03.2026**
(21) Application number: 25201536.7
(22) Date of filing: 11.09.2025
(51) Int. Cl.: G06F 1/3234, G06F 1/3215

(54) **COMPUTER PROGRAM, CONTROL METHOD FOR ELECTRONIC DEVICE, AND ELECTRONIC DEVICE**

(30) Priority: 20.09.2024 JP 2024163921
(71) Applicant: Casio Computer Co., Ltd., Tokyo 151-8543 (JP)
(72) Inventor: YOSHIZAWA, Hiroaki, Tokyo, 205-8555 (JP)
(74) Representative: Plougmann Vingtoft a/s

(57) **Abstract**

A computer program for controlling an electronic device including a communication module, a setting interface for selectively setting the electronic device to either a first mode or a second mode performing a wireless communication at least with an external device, and at least one processor, the computer program includes instructions which, when the program is executed by the at least one processor, causing the electronic device to perform: when no input operation to the electronic device is received for a first time in a state where the first mode is set, setting the electronic device to a more power-saving mode than the first mode; and when no input operation to the electronic device being received for a second time in a state where the second mode is set, which is longer than the first time, setting the electronic device to a more power-saving mode than the second mode.

## Description

### TECHNICAL FIELD

The present disclosure relates to a computer program, a control method for an electronic device, and the electronic device.

### BACKGROUND ART

In various electronic devices, if no input operation from a user is received for a predetermined time or more, processing of automatically switching to a power-saving mode to reduce power consumption is performed. In an invention described in JP2010-97293A, in an information processing device having an auto power-off function, one power-saving mode is set according to settings input from a user from among a plurality of power-saving modes having different power consumption reduction effects in stages, and in the power-saving mode, whether to execute auto power-off during processing that is being performed is determined according to a degree of influence on the own device when the processing ends.

### SUMMARY OF INVENTION

In an electronic device that can wirelessly communicate with an external device, required operating conditions or the like are different between a case where the electronic device performs highly independent processing such as processing being completed by the own device and a case where the electronic device performs highly cooperative processing such as operating the external device which is a wireless communication destination, and there is a demand for finely power-saving settings corresponding to states of the electronic device and the external device. An existing technique, including that in JP2010-97293A, does not sufficiently meet such a demand.

Illustrative aspects of the present disclosure implement optimum power management corresponding to an operation state in an electronic device that can wirelessly communicate with an external device.

One illustrative aspect of the present disclosure provides a computer program for controlling an operation of an electronic device, the electronic device including: a communication module including an antenna for wirelessly communicating with an external device; a setting interface configured to selectively set the electronic device to either a first mode or a second mode which is different from the first mode and in which the electronic device wirelessly communicates at least with the external device; and at least one processor. The computer program includes instructions which, when the program is executed by the at least one processor, causing the electronic device to perform: in response to no input operation to the electronic device being received for a first time in a state where the first mode is set, setting the electronic device to a more power-saving mode than the first mode; and in response to no input operation to the electronic device being received for a second time in a state where the second mode is set, which is longer than the first time, setting the electronic device to a more power-saving mode than the second mode.

According to the above aspect, optimum power management corresponding to an operation state can be implemented in the electronic device that can wirelessly communicate with the external device.

### BRIEF DESCRIPTION OF DRAWINGS

FIG. 1 is a front view of an electronic device.
FIG. 2 is a block diagram showing a hardware configuration of the electronic device.
FIG. 3 is a diagram showing a concept of a CAL mode and a PC mode.
FIG. 4 is a diagram illustrating a process of connecting the electronic device and an external device by wireless communication.
FIG. 5 is a diagram showing a transition of operation modes of the electronic device.
FIG. 6 is a diagram showing power management and a display example of a display unit for each operation mode of the electronic device.
FIG. 7 is a flowchart showing the power management of the electronic device.

### DESCRIPTION OF EMBODIMENTS

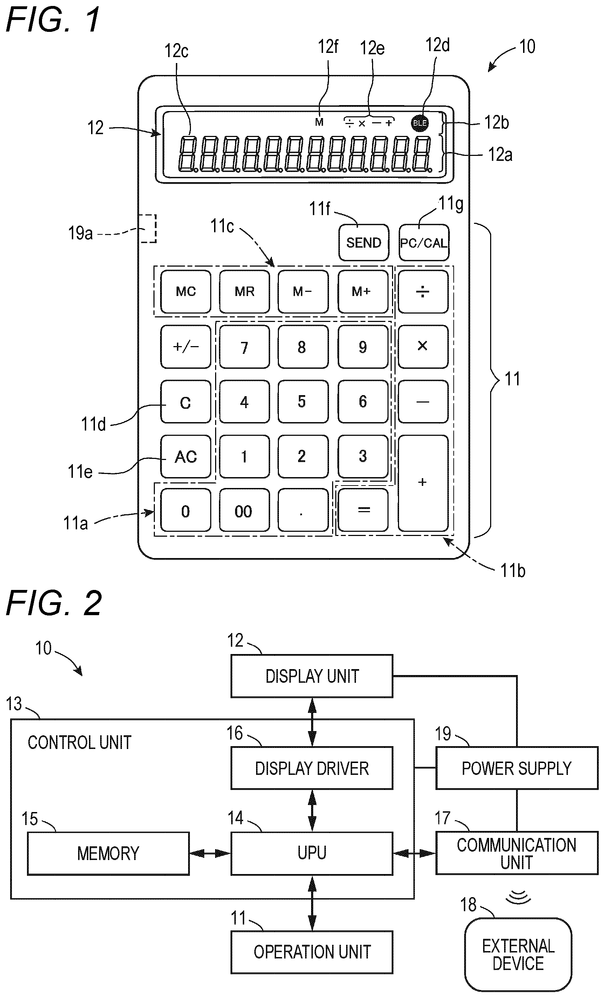

An electronic device 10 shown in FIG. 1 can be switched between a calculator mode (hereinafter, referred to as a CAL mode), which is a first mode in which the electronic device 10 is used as a calculator for calculation, and an external connection mode (hereinafter, referred to as a PC mode), which is a second mode in which the electronic device 10 wirelessly communicate with an external device to input information to the external device (the own device is not used as a calculator).

An operation unit 11 of the electronic device 10 is a part for receiving an operation of a user and includes a plurality of physical keys. In a numeric key region 11a of the operation unit 11, a total of eleven numeric keys from "0" to "9" and "00" and a decimal point key are arranged. In a calculation instruction key region 11b of the operation unit 11, four arithmetic operation keys for selecting a type of an arithmetic operation including addition, subtraction, multiplication, division (+, -, ×, ÷), and an equal key for selecting completion of the arithmetic operation are arranged. In a memory key region 11c of the operation unit 11, four keys (MC, MR, M +, M -) for memory operations are arranged. The operation unit 11 further includes a clear key (C key) 11d, an all-clear key (AC key) 11e, a Send key 11f, and a PC/CAL key 11g. When the electronic device 10 is used as a calculator, a number input immediately before is erased by operating the clear key 11d, and all the numbers are erased by operating the all-clear key 11e. The Send key 11f and the PC/CAL key 11g are used as operation keys related to wireless communication with an external device 18 to be described later, and forming a setting unit for selectively setting any one of the CAL mode which is the first mode and the PC mode which is the second mode. The operation unit 11 may include a key other than the keys shown in FIG. 1 (for example, a function key for tax calculation, a function key for function calculation, or the like), a slide switch other than the push-in type key, or the like. The operation unit 11 is not limited to the physical keys, and may be implemented by a touch panel or the like.

The display unit 12 of the electronic device 10 is implemented by a display device such as a liquid crystal display or a light emitting diode (LED). The display unit 12 includes a first display region 12a and a second display region 12b. The first display region 12a includes a plurality of seven-segment display units 12c. In the electronic device 10, twelve seven-segment display units 12c are arranged adjacently, and the first display region 12a has a display capability of 12 digits. Each of the seven-segment display units 12c has seven segments each of which is an elongated rod-shaped display unit, and display of each segment can be individually switched on and off. A display content changes depending on a combination of on and off of the display of the seven segments. Specifically, each of the seven-segment display units 12c can display Arabic numerals from 0 to 9 and a part of Latin characters (alphabets). In the second display region 12b, a mark or an icon specialized for displaying specific information in the electronic device 10 is arranged. Specifically, a communication indicator 12d indicating a state of communication or connection with the external device, a four arithmetic operation indicator 12e indicating an arithmetic operation of addition, subtraction, multiplication, multiplication (+, -, x, ÷), a memory indicator 12f indicating a state of memory calculation, and the like are arranged in the second display region 12b. Although FIG. 1 shows a form in which the indicators in the second display region 12b are displayed at the same time for convenience, actually, regarding the four arithmetic operation indicator 12e and the memory indicator 12f, only an indicator corresponding to a key operated by the user in the calculation instruction key region 11b and the memory key region 11c is displayed, and regarding the communication indicator 12d, display corresponding to a communication state to be described later is performed. The second display region 12b may include display elements (marks, icons, and the like) other than the indicators shown in FIG. 1.

As shown in FIG. 2, a control unit 13 of the electronic device 10 includes a central processing unit (CPU) 14 that is a processor, a memory 15 that is a storage unit, and a display driver 16 that drives and controls the display of the display unit 12. When each key of the operation unit 11 is operated, an operation signal is input to the control unit 13. The memory 15 includes a read only memory (ROM) in which a program for controlling the electronic device 10 is stored, and a random access memory (RAM) used as a temporary data storage area. Each unit of the electronic device 10 is controlled by reading the program stored in the ROM of the memory 15 and performing arithmetic processing by the memory 15. The display driver 16 controls the display unit 12 based on a control signal transmitted from the CPU 14 to perform display in the first display region 12a and the second display region 12b.

A communication unit 17 is a wireless communication module for the electronic device 10 to wirelessly communicate with another external device 18. The wireless communication module may include an antenna for performing wireless communication with the external device 18. The external device 18 with which the communication unit 17 communicates is, for example, a personal computer, a tablet computer, or a smartphone. A communication standard of the communication unit 17 is to exchange encryption keys with the external device 18 to perform encrypted data communication, and Bluetooth Low Energy (registered trademark) is applied as an example. Hereinafter, a case where the electronic device 10 uses Bluetooth Low Energy as the communication standard, that is, a case where the communication unit 17 is a communication module for Bluetooth Low Energy will be described. The external device 18 includes a communication module that can perform encrypted communication with the communication unit 17.

The electronic device 10 incorporates a power supply 19, and the electronic device 10 operates by power supply from the power supply 19. The power supply 19 is a secondary battery (a lithium ion battery, a nickel metal hydride battery, or the like) that can be repeatedly charged and discharged, and can be charged by supplying power to the power supply 19 via a power supply terminal 19a (FIG. 1). The electronic device 10 may include a solar panel that converts light energy into power, and the power generated by the solar panel may be supplied to the power supply 19.

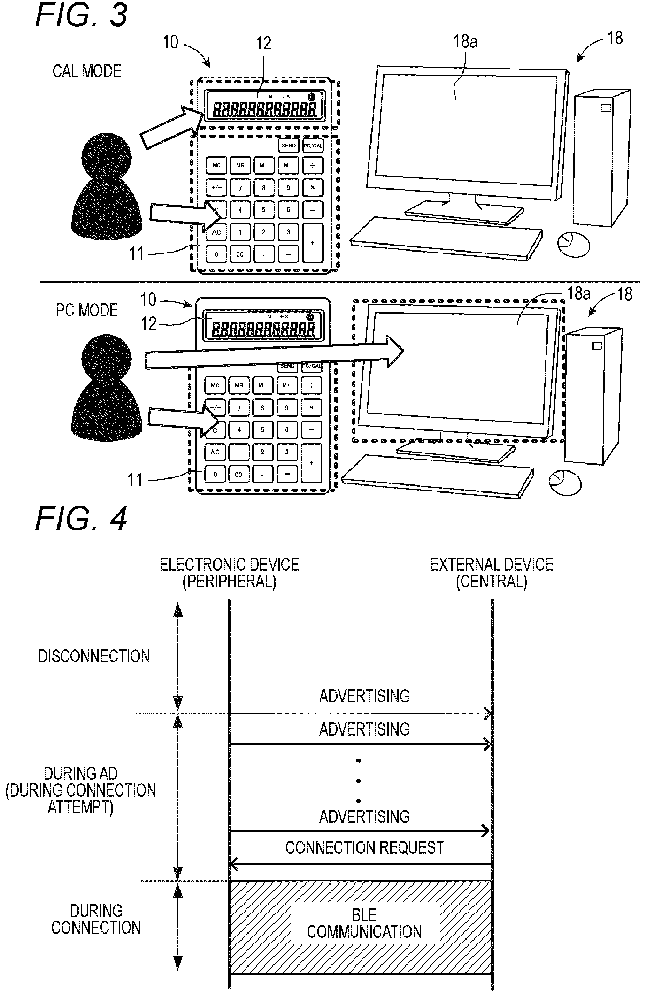

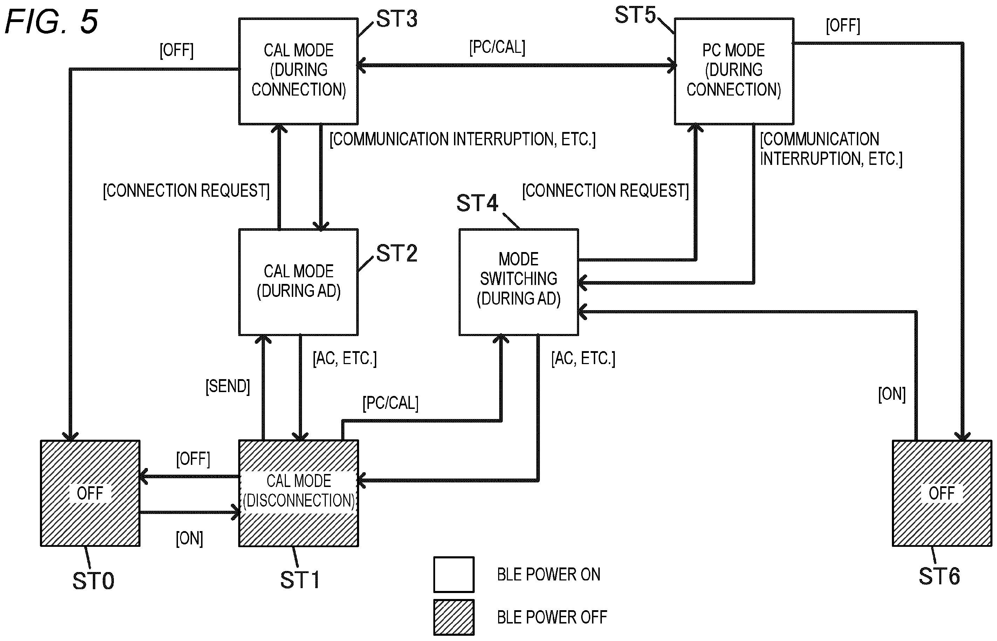

As shown in FIG. 3, in the CAL mode in the electronic device 10, when the user operate the operation unit 11, the electronic device 10 functions as a calculator to perform calculation or the like according to the operation of the user, and an operation content (for example, a numerical value input due to the operation on the numeric key) and a calculation result are displayed on the display unit 12. As will be described later, the CAL mode includes a case where the electronic device 10 functions as a stand-alone terminal that does not communicate with the external device 18 (CAL mode (disconnection) of ST1 shown in FIG. 5) and a case where the electronic device 10 can communicate with the external device 18 (CAL mode (during connection) of ST3 shown in FIG. 5), but the electronic device 10 functions as a calculator by itself in any case.

In the PC mode in the electronic device 10, the electronic device 10 does not function as an independent calculator, and when the user operates the operation unit 11, a signal corresponding to an operation content is wirelessly transmitted from the electronic device 10 to the external device 18 via the communication unit 17, and reception processing of the signal is performed in the external device 18. That is, the operation unit 11 of the electronic device 10 can be used as an input device of the external device 18. The operation content based on each key of the operation unit 11 in the PC mode is appropriately set according to a type of an operating system of the external device 18 and an application operating on the external device 18. For example, in a case where the application of the external device 18 is in a state of receiving numerical value input, when each key in the numeric key region 11a is operated in the electronic device 10 in the PC mode, numerical information corresponding to the key is input to the external device 18, and the electronic device 10 can be used as a numerical value input device (so-called ten-key device) in the external device 18. In the PC mode, a key other than those in the numeric key region 11a in the operation unit 11 may be used as a command key for inputting a predetermined command other than a numerical value to the external device 18. For example, each key in the calculation instruction key region 11b and the memory key region 11c can function as an arrow key for moving a cursor or a command key for copying or pasting a character string. The operation content input via the operation unit 11 in the PC mode and a processing content based on the operation are displayed on a display unit 18a provided in the external device 18. As described above, the PC mode of the electronic device 10 is a mode in which the own device is operated to input information to at least the external device 18 without being used as a calculator.

As shown in FIG. 4, the communication between the electronic device 10 and the external device 18 is performed with the electronic device 10 as a peripheral apparatus and the external device 18 as a central apparatus. In a state where a power supply of the communication unit 17 is turned on and the electronic device 10 and the external device 18 are in a disconnected state, the electronic device 10 performs advertising at a predetermined cycle. The advertising is broadcast communication for transmitting data from the peripheral apparatus to an unspecified number of partners, and is a state of indicating a location of the own device to the central apparatus and waiting for connection (a state of attempting connection). When the external device 18, which is the central apparatus, makes a connection request to the electronic device 10 during the advertising, the electronic device 10 stops the advertising and switches to one-to-one communication with the external device 18.

The data communication between the electronic device 10 and the external device 18 is performed by encrypting the data. When pairing is performed between the electronic device 10 and the external device 18 to exchange a data encryption key while the one-to-one communication is being performed, and the pairing is established, the electronic device 10 and the external device 18 are connected such that data communication is possible therebetween. In a case of the electronic device 10 and the external device 18 that have been connected in the past, as long as bonding for storing the key exchanged in the previous pairing has been performed, the electronic device 10 and the external device 18 are shifted to a state where encrypted communication can be performed without performing pairing processing, at a stage in which the communication between the electronic device 10 and the external device 18 is established.

As shown in FIG. 5, the electronic device 10 is roughly divided into five operation modes ST1 to ST5. ST0 and ST6 are states in which a main power supply of the electronic device 10 is turned off. When the user performs an operation of turning on the main power supply in a state where the main power supply is turned off, an instruction for shifting to power-on is input to the control unit 13, and the electronic device 10 is started up. The main power supply is turned on and off by, for example, long-pressing the all-clear key 11e or operating a power switch (not shown). The control unit 13 stores, in the memory 15, the operation mode used when the main power supply of the electronic device 10 is previously turned off, and starts up the electronic device 10 in the CAL mode by turning on the main power supply when the previous operation mode is the CAL mode, and starts up the electronic device 10 in the PC mode by turning on the main power supply when the previous operation mode is the PC mode.

When the electronic device 10 is started up in the CAL mode by turning on the main power supply, the CAL mode (disconnection) of ST1 is selected. In the CAL mode (disconnection) of ST1, the control unit 13 continues a state where the power supply of the communication unit 17 is turned off, and operates the electronic device 10 in a disconnection state where communication with the external device 18 is not performed. That is, the electronic device 10 is operated as a stand-alone calculator. When the user operates the Send key 11f during the operation in the CAL mode (disconnection) of ST1, the control unit 13 turns on the power supply of the communication unit 17 to set the electronic device 10 to an advertising state, and the mode transitions to the CAL mode (during AD) of ST2. When a connection request from the external device 18 is received in the CAL mode (during AD) of ST2 and the connection with the external device 18 is established (a state where the encrypted data communication can be performed), the mode transitions to the CAL mode (during connection) of ST3.

In the CAL mode (disconnection) of ST1, when the user operates the operation unit 11 to input numerical values to the electronic device 10 and causes the electronic device 10 to perform calculation, the numerical values input at the time of operating the Send key 11f or a calculation result (a value displayed in the first display region 12a of the display unit 12) is transmitted to the external device 18 at a stage of the CAL mode (during connection) of ST3. Further, in the CAL mode (during connection) of ST3, when the Send key 11f is operated in a state where the user operates the operation unit 11 to input numerical values to the electronic device 10 and causes the electronic device 10 to perform calculation, the numerical values or the calculation result (the value displayed in the first display region 12a of the display unit 12) input at the time of operating the Send key 11f is transmitted to the external device 18. That is, in the CAL mode, by operating the Send key 11f, the numerical values input in the CAL mode and the calculation result obtained in the CAL mode can be shared with the external device 18 to which the electronic device 10 is wirelessly connected.

When a specific time elapses or the all-clear key 11e is operated in the CAL mode (during AD) of ST2, the control unit 13 turns off the power supply of the communication unit 17 to cancel the advertising, and the mode transitions to the CAL mode (disconnection) of ST1. In the CAL mode (during connection) of ST3, when the communication with the external device 18 is interrupted (for example, the power supply of the external device 18 is turned off, a distance between the electronic device 10 and the external device 18 is greatly increased, or the like), the mode transitions to the CAL mode (during AD) of ST2.

When the user operates the PC/CAL key 11g during the operation in the CAL mode (disconnection) of ST1, the control unit 13 turns on the power supply of the communication unit 17 to cause the electronic device 10 to enter the advertising state, and the mode transitions to a mode switching state (during AD) of ST4. When the connection request from the external device 18 is received in the mode switching state (during AD) of ST4 and the connection with the external device 18 is established (a state where the encrypted data communication can be performed), the mode transitions to the PC mode (during connection) of ST5. When the user operates the PC/CAL key 11g during the operation in the CAL mode (during connection) of ST3, the mode transitions to the PC mode (during connection) of ST5. In the CAL mode (during connection) of ST3, since the connection between the electronic device 10 and the external device 18 is already established, the mode can be shifted to the PC mode (during connection) of ST5 without going through advertising. In this way, the mode can be switched from the CAL mode to the PC mode in response to any operation from the user. In the PC mode (during connection) of ST5, the operation content performed by the user on the operation unit 11 of the electronic device 10 is input to the external device 18, and the electronic device 10 can be used as an input device of the external device 18. When the user operates the PC/CAL key 11g in the PC mode (during connection) of ST5, the mode transitions to the CAL mode (during connection) of ST3.

When a specific time elapses or the all-clear key 11e is operated in the mode switching state (during AD) of ST4, the control unit 13 turns off the power supply of the communication unit 17 to cancel the advertising, and the mode transitions to the CAL mode (disconnection) of ST1. In the PC mode (during connection) of ST5, when the communication with the external device 18 is interrupted (for example, the power supply of the external device 18 is turned off, the distance between the electronic device 10 and the external device 18 is greatly increased, or the like), the mode transitions to the mode switching state (during AD) of ST4.

When the electronic device 10 is started up in the PC mode by turning on the main power supply, the control unit 13 supplies power to the communication unit 17 to turn on the power supply to start advertising, and performs the connection to the external device 18 after setting the mode to the mode switching state (during AD) of ST4. Since previous use of the electronic device 10 being ended in the PC mode means that the electronic device 10 is paired with the external device 18 and connected to the external device 18, as long as the external device 18 is started up at a stage when the connection processing on an electronic device 10 side is started and can communicate with the electronic device 10, the connection between the electronic device 10 and the external device 18 is immediately established, and the electronic device 10 enters the PC mode (during connection) of ST5. However, in a state where the external device 18 is not powered on or in a state where the distance between the electronic device 10 and the external device 18 increases and communication is impossible, the PC mode is not established and the mode switching state (during AD) of ST4 continues.

In a case where the electronic device 10 operates in the CAL mode (ST1, ST3) or the PC mode (PT5), when an operation of turning off the main power supply is performed by the user and an instruction to shift to power-off is received, the control unit 13 turns off the main power supply of the electronic device 10. Further, the electronic device 10 has an auto power-off function of automatically turning off the main power supply after a specific time elapses, and when a state where there is no input operation from the user continues for a specific time in the CAL mode (ST1, ST3) or the PC mode (PT5), the control unit 13 receives an instruction to shift to power-off triggered by the elapse of the time, and turns off the main power supply of the electronic device 10. When the main power supply is turned off in the CAL mode (ST1, ST3), the electronic device 10 enters a power-off state of ST0, and when the main power supply is turned off in the PC mode (ST5), the electronic device 10 enters a power-off state of ST6. The control unit 13 monitors the operation mode of the electronic device 10 when the main power supply is turned off, and causes the memory 15 to store whether the operation mode during the previous operation is the CAL mode or the PC mode. That is, when transitioning to the power-off state of ST0, information indicating that the mode is the CAL mode during the previous operation is stored in the memory 15, and when transitioning to the power-off state of ST6, information indicating that the mode is the PC mode during the previous operation is stored in the memory 15. Therefore, when the main power supply of the electronic device 10 is turned on, the control unit 13 can select whether to start up the electronic device 10 in the CAL mode (the CAL mode (disconnection) of ST1 in which no power is supplied to the communication unit 17) or the PC mode by referring to the information stored in the memory 15.

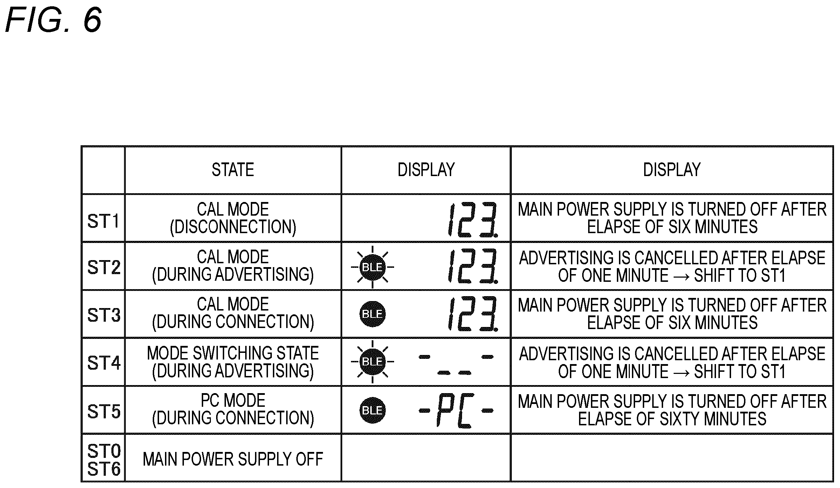

The control unit 13 causes the display unit 12 to perform a display in each of the modes ST1 to ST5 via the display driver 16. The user can confirm the operation mode of the electronic device 10 by viewing a display content on the display unit 12. FIG. 6 shows a display example of the display unit 12 in each mode. In the CAL mode, regardless of whether the electronic device 10 is disconnected with the external device 18 (ST1), is advertising (ST2), or is connected with the external device 18 (ST3), the numerical values input by the user and the calculation result are displayed in the first display region 12a. The display examples of FIG. 6 show a case where keys "1", "2", and "3" in the numeric key region 11a are operated. During the advertising (ST2, ST4), the communication indicator 12d in the second display region 12b blinks. In the CAL mode (during AD) of ST2, the numerical values and the calculation result are displayed in the first display region 12a as described above, but in the mode switching state (during AD) of ST4, a display in a special form using four seven-segment display units 12c (a display in which two hyphen and two underbars are combined) is displayed in the first display region 12a. During the connection with the external device 18 (ST3, ST5), the communication indicator 12d in the second display region 12b is lit (continuously lit). In the CAL mode (during connection) of ST3, the numerical values and the calculation result are displayed in the first display region 12a as described above, but in the PC mode (during connection) of ST5, a display in a special form using four seven-segment display units 12c (a display in which two hyphens and characters of PC are combined) is displayed in the first display region 12a.

As shown in FIG. 6, the control unit 13 of the electronic device 10 performs power management corresponding to the operation mode in a state where the main power supply of the electronic device 10 is turned on. In a state where the electronic device 10 is not advertising (ST1, ST3, ST5), when an input operation from the user is not received for a predetermined time or more, the control unit 13 performs auto power-off processing of turning off the main power supply of the electronic device 10. The control unit 13 has a time-measuring function of obtaining time information based on a time function (system time) of an operating system of the electronic device 10 or from an integrated circuit (real-time clock) in which the time function is implemented, and measuring (clocking) an elapsed time. In the following description, the elapsed time is detected by the time-measuring function of the control unit 13.

When the electronic device 10 operates in the CAL mode (ST1, ST3) to function as a calculator, the control unit 13 performs processing of turning off the main power supply of the electronic device 10 if no input operation from the user is received for six minutes or more (an non-operation state continues for six minutes or more) in both the CAL mode (disconnection) of ST1 in which the electronic device 10 is not connected with the external device 18 and the CAL mode (during connection) of ST3 in which the electronic device 10 is connected with the external device 18. When the electronic device 10 operates in the PC mode (ST5) to function as an input device of the external device 18, if no input operation from the user is received for 60 minutes or more (the non-operation state continues for 60 minutes or more), the control unit 13 performs processing of turning off the main power supply of the electronic device 10.

When the electronic device 10 is used as a calculator in the CAL mode, since most of calculation processing desired by the user is performed by performing an input operation to the operation unit 11, a use form is assumed in which the input operation is continuously performed on each key of the operation unit 11 without leaving much time before the calculation is completed. Therefore, even if a standby time before the control unit 13 executes the auto power-off is set to a relatively short first time (six minutes), the electronic device 10 is less likely to shift to the auto power-off at a high frequency against an intention of the user. Further, since the electronic device 10 enters the auto power-off state in the relatively short first time (six minutes), unnecessary power consumption can be prevented as much as possible in a state where the user does not intend to operate the electronic device 10. In particular, since the power consumption in the CAL mode (during connection) of ST3 in which the power supply of the communication unit 17 is turned on is larger than that in the CAL mode (disconnection) of ST1 in which the power supply of the communication unit 17 is turned off, in the CAL mode (during connection) of ST3, an effect of reducing the power consumption is also increased by performing control such that the auto power-off is performed after the same first time (six minutes) as in the CAL mode (disconnection) of ST1 elapses. The first time is not limited to six minutes as long as a condition that the first time is shorter than a second time to be described later is satisfied.

When the electronic device 10 is used in the PC mode, work in the external device 18 may be diverse, including, in addition to inputting numerical values and the like using the electronic device 10 as an input device, including creating an e-mail, browsing a Web browser, viewing multimedia such as music or video, processing images, playing games or the like. When the external device 18 is used in such multitasking, it is assumed that the standby time during which the user does not operate the operation unit 11 of the electronic device 10 in the PC mode tends to be longer than that in the CAL mode. Therefore, when the electronic device 10 is controlled to shift to the auto power-off after a time equal to or shorter than that in the CAL mode elapses, the input of the numerical values or the like by the operation of the operation unit 11 cannot be received at a timing earlier than that desired by the user, and it is necessary to restart the electronic device 10 or reconnect the electronic device 10 to the external device 18, so that usability of the electronic device 10 in the PC mode may deteriorate. On the other hand, in the PC mode of the electronic device 10, if the main power supply is continuously turned on without applying the auto power-off control, the power consumption increases.

Meanwhile, as in the electronic device 10 of the present illustrative embodiment, in the PC mode (during connection) of ST5, the control unit 13 performs control to perform the auto power-off of the electronic device 10 in the second time (60 minutes) longer than the first time (six minutes), and thus unnecessary power consumption can be prevented without impairing the usability of the user in the PC mode. The second time is not limited to 60 minutes as long as the condition that the second time is longer than the first time is satisfied. An optimum second time can be appropriately set according to a frequency of the operation assumed to be performed by the user on the operation unit 11 of the electronic device 10 in the PC mode, a type of an application operating on the external device 18, or the like.

As shown in FIG. 6, during the advertising of the electronic device 10 (ST2, ST4), when a state where the connection with the external device 18 is not established continues for one minute or more, which is a third time, the control unit 13 turns off the power supply of the communication unit 17 to cancel (stop) the advertising. By cancelling the advertising, the mode transitions to the CAL mode (disconnection) of ST1. Therefore, in the CAL mode (during AD) of ST2 and the mode switching state (during AD) of ST4, when the connection with the external device 18 is not established and the input operation from the user to the operation unit 11 is not received, the main power supply of the electronic device 10 is automatically turned off if a total of seven minutes elapses, including a standby time of one minute until the cancellation of the advertising and a standby time of six minutes until the shifting to the auto power-off in the CAL mode. In this way, even during the advertising in which the communication connection with the external device 18 is attempted, when the connection with the external device 18 is not established, the electronic device 10 can be shifted to the power-saving mode under the control of the control unit 13 to prevent unnecessary power consumption.

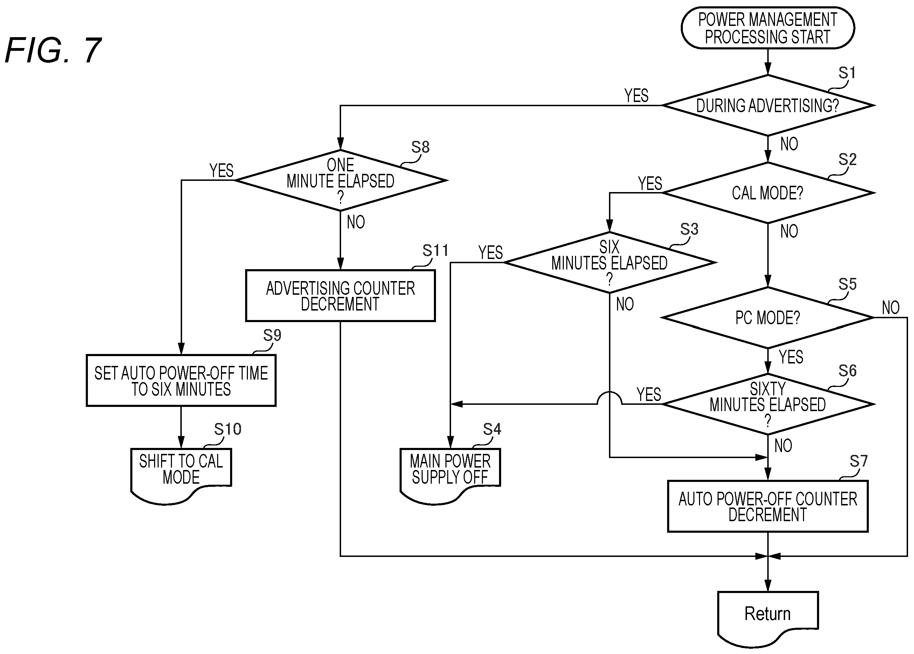

FIG. 7 shows an example of power management processing performed by the control unit 13 in the electronic device 10. The control unit 13 starts time measurement as the power management processing starts. First, in step S1, the control unit 13 determines whether the electronic device 10 is advertising. If the electronic device 10 is not advertising (NO in step S1), the processing proceeds to step S2, and the control unit 13 determines whether the electronic device 10 is in the CAL mode. If the electronic device 10 is in the CAL mode (YES in step S2), the processing proceeds to step S3, and the control unit 13 determines whether six minutes, which is the first time, have elapsed since the start of the time measurement with no input operation to the operation unit 11 being received. If the elapse of six minutes is detected (YES in step S3), the processing proceeds to step S4, and the control unit 13 turns off the main power supply of the electronic device 10. In this case, the power supply is turned off in the CAL mode, and the control unit 13 stores, in the memory 15, that the operation mode at the time of the previous operation is the CAL mode.

If the electronic device 10 is not in the CAL mode (NO in step S2), the processing proceeds to step S5, and the control unit 13 determines whether the electronic device 10 is in the PC mode. If the electronic device 10 is in the PC mode (YES in step S5), the processing proceeds to step S6, and the control unit 13 determines whether 60 minutes, which is the second time, have elapsed since the start of the time measurement with no input operation to the operation unit 11 being received. If the elapse of 60 minutes is detected (YES in step S6), the processing proceeds to step S4, and the control unit 13 turns off the main power supply of the electronic device 10. In this case, the power supply is turned off in the PC mode, and the control unit 13 stores, in the memory 15, that the operation mode at the time of the previous operation is the PC mode.

In step S3, if the input operation to the operation unit 11 is received before the elapse of six minutes which is the first time (NO in step S3), or in step S6, if the input operation to the operation unit 11 is received before the elapse of 60 minutes which is the second time (NO in step S6), the processing proceeds to step S7, a counter indicating the auto power-off processing is decremented, and then the processing returns to the start of the power management processing.

In step S5, if the electronic device 10 is not in the PC mode (NO in step S5), the state does not correspond to any of the states ST1 to ST5, and the processing returns to the start of the power management processing. Since the electronic device 10 is normally in the PC mode if not in the CAL mode, it may be determined that the electronic device 10 is in the PC mode based on a determination that the electronic device 10 is not in the CAL mode (NO in step S2). Regarding step S5, if the processing in step S5 is called when a certain error occurs, the determination is NO, and nothing is performed regarding the auto power-off, thereby functioning as a safety code. Therefore, step S5 may be omitted.

If it is determined in step S1 that the advertising is being performed (YES in step S1), the processing proceeds to step S8, and the control unit 13 determines whether one minute, which is a third time, has elapsed since the start of the time measurement with the connection with the external device 18 not being established. If the elapse of one minute is detected (YES in step S8), the processing proceeds to step S9, and the control unit 13 sets a time of six minutes, which is the first time for shifting to the auto power-off, and then turns off the power supply of the communication unit 17 to shift the operation mode of the electronic device 10 to the CAL mode (CAL mode (disconnection) of ST1) in step S10. Accordingly, the determination in step S2 described above proceeds to YES.

In step S8, if the connection with the external device 18 is established before the elapse of one minute, which is the third time (NO in step S8), the processing proceeds to step S11, a counter indicating that the advertising is being performed is decremented, and then the processing returns to the start of the power management processing.

As described above, in the electronic device 10, if no input operation to the own device is received for the first time (six minutes) in a state where the first mode (CAL mode) is set, or if no input operation to the own device is received for the second time (60 minutes), which is longer than the first time, in a state where the second mode (PC mode) is set, the control unit 13 performs processing of shifting the mode to the power-saving mode in which the main power supply is turned off. In each of the first mode and the second mode, the mode is shifted to the power-saving mode if no input operation is received for a time of a predetermined length or more, and thus power consumption in a situation in which the user is not operating the electronic device 10 can be prevented. Further, in the highly independent first mode (CAL mode) in which the electronic device 10 functions as a calculator and consistently performs all operations from the input operation to the calculation processing and the display processing in the own device and the second mode (PC mode) in which the electronic device 10 performs processing of operating the external device 18 which is a wireless communication destination, a time until the mode is shifted to the power-saving mode if no input operation to the own device is received is different, and the second time until the mode is shifted to the power-saving mode in the second mode (PC mode) is set to be longer than the first time until the mode is shifted to the power-saving mode in the first mode (CAL mode). Accordingly, even if a time during which the user does not perform the input operation to the electronic device 10 increases to some extent in the second mode (PC mode), the electronic device 10 is not shifted to the power-saving mode and the connection with the external device 18 is maintained, and thus the usability when the electronic device 10 is used in the second mode (PC mode) is improved. Therefore, in the electronic device 10 that can wirelessly communicate with the external device 18, optimum power management (power-saving settings) corresponding to the operation state can be realized.

In particular, as in the electronic device 10 according to the present illustrative embodiment, in a use method in which the own device is used as a calculator in the first mode and the own device is operated to input information to at least the external device 18 without being used as a calculator in the second mode, the second time for shifting from the second mode to the power-saving mode is set to be longer than the first time for shifting from the first mode to the power-saving mode, so that power management suitable for a difference in a use form of the electronic device 10 in each mode is obtained, and a balance between the power saving and the usability in each mode is excellent.

In the electronic device 10, if an instruction to shift the mode to the second mode (PC mode) (input operation of the Send key 11f or the PC/CAL key 11g) is received in the first mode (CAL mode), the control unit 13 causes the communication unit 17 to start connection processing (advertising) with the external device 18. Then, if the connection with the external device 18 is not established and the third time (one minute) elapses, the connection processing (advertising) is cancelled to return to the first mode (CAL mode), and the time until the mode is shifted to the power-saving mode is set to the first time (six minutes). Accordingly, even if the connection processing with the external device 18 is not established, the mode can be automatically shifted to the power-saving mode, and the power consumption can be reduced. Further, a waiting time of the input operation for shifting the mode to the power-saving mode after the connection processing (advertising) is cancelled is set to the first time (six minutes), and thus the mode can be shifted to the power-saving mode without waiting for the second time (60 minutes) longer than the first time (six minutes) and the power consumption can be reduced.

The illustrative embodiment described above shows a specific example to facilitate understanding of the invention, but the present invention is not limited to the illustrative embodiment, and various modifications and changes are possible without departing from the gist of the invention.

In the above illustrative embodiment, if no input operation to the own device is received for the first time (six minutes) in a state where the first mode (CAL mode) is set, or if no input operation to the own device is received for the second time (60 minutes) longer than the first time in a state where the second mode (PC mode) is set, the control unit 13 shifts the mode to a mode in which the main power supply of the electronic device 10 is turned off as a more power-saving mode than the first mode (CAL mode) and the second mode (PC mode). By turning off the main power supply, an excellent power-saving effect with smallest power consumption can be obtained. However, the processing performed by the control unit 13 to set the mode to a more power-saving mode than the first mode (CAL mode) and the second mode (PC mode) may be processing other than turning off the power supply of the electronic device 10.

As a different example of the more power-saving mode than the first mode (CAL mode) and the second mode (PC mode), the control unit 13 may shift the mode to a sleep mode in which the electronic device 10 is put into a sleep state. The sleep state of the electronic device 10 is, for example, a state where the main power supply is turned on, and is a standby state where power supply to each unit is temporarily stopped or minimized, except for minimum power supply for maintaining storage contents in the RAM forming the memory 15. In the sleep mode, the operation unit 11 can receive an input operation (including an operation other than turning on the main power supply), and when the operation unit 11 receives an input operation, the power supply to each unit is resumed, and the sleep mode is canceled. The control may be performed such that the sleep mode is canceled simply when a specific key of the operation unit 11 is operated, or the control may be performed such that the sleep mode can be canceled by operating all keys of the operation unit 11.

As a different example of the more power-saving mode than the first mode (CAL mode) and the second mode (PC mode), the control unit 13 may shift the mode to a display off mode in which the display of the display unit 12 is turned off. For example, when shifting to the display off mode, the control unit 13 stops display of a display content in each mode shown in FIG. 6 (display of numbers or special forms in the first display region 12a, blinking or lighting of the communication indicator 12d in the second display region 12b). In both the PC mode (during connection) of ST5 and the CAL mode (during connection) of ST3, since the power supply of the communication unit 17 is turned on, the wireless communication with the external device 18 is established, and the display as shown in FIG. 6 is performed on the display unit 12, a more power-saving mode than the first mode (CAL mode) and the second mode (PC mode) can be set by turning off the display of the display unit 12. Further, in the CAL mode (disconnection) of ST1, since the display as shown in FIG. 6 is performed on the display unit 12 in a state where the power supply of the communication unit 17 is turned off, by turning off the display of the display unit 12 in the power-saving mode, the power consumption can be further reduced.

Although the electronic device 10 of the above illustrative embodiment functions as a calculator in the first mode, the electronic device to which the present invention is applied is not limited to a calculator. For example, there is known a wristwatch-type wearable device that can be switched between a first mode in which the own device performs processing such as the time measurement and life log management when an input operation is received, and a second mode in which the own device wirelessly communicate with an external device such as a smartphone to perform some operation (such as reproduction or stop of music) on the external device. The present invention can also be applied to an electronic device of such a type, and power management suitable for each of the first mode and the second mode can be realized.

In the electronic device 10 of the above illustrative embodiment, the operation unit 11 includes a plurality of physical keys, but input-operation reception means provided in the electronic device is not limited to such physical keys, and may be a software keyboard or the like in which the input operation is performed by touching a touch panel.

## Claims

1. A computer program for controlling an operation of an electronic device, the electronic device including:
a communication module including an antenna for wirelessly communicating with an external device;
a setting interface configured to selectively set the electronic device to either a first mode or a second mode which is different from the first mode and in which the electronic device wirelessly communicates at least with the external device; and
at least one processor,
the computer program comprising instructions which, when the program is executed by the at least one processor, causing the electronic device to perform:
in response to no input operation to the electronic device being received for a first time in a state where the first mode is set, setting the electronic device to a more power-saving mode than the first mode; and
in response to no input operation to the electronic device being received for a second time in a state where the second mode is set, which is longer than the first time, setting the electronic device to a more power-saving mode than the second mode.

2. The computer program according to claim 1, wherein the instructions, when executed by the at least one processor, cause the electronic device to perform:
in response to an instruction for shifting to the second mode being received in the first mode, causing the communication module to start connection processing of connecting with the external device; and
in response to a third time elapsed since a start of the connection processing with the connection with the external device not being established, returning to the first mode.

3. The computer program according to claim 1,
wherein the first mode is a mode in which the electronic device is used as a calculator, and
wherein the second mode is a mode in which the electronic device is operated to input information to at least the external device without being used as a calculator.

4. The computer program according to any one of claims 1 to 3, wherein the instructions, when executed by the at least one processor, cause the electronic device to perform:
in the power-saving mode, turning off a power supply of the electronic device, setting the electronic device to a sleep state, or turning off display of a display unit of the electronic device.

5. A control method for an electronic device, the electronic device including:
a communication module including an antenna for wirelessly communicating with an external device;
a setting interface configured to selectively set the electronic device to either a first mode or a second mode which is different from the first mode and in which the electronic device wirelessly communicates at least with the external device; and
at least one processor,
the control method comprising controlling the at least one processor to perform:
in response to no input operation to the electronic device being received for a first time in a state where the first mode is set, setting the electronic device to a more power-saving mode than the first mode; and
in response to no input operation to the electronic device being received for a second time, which is longer than the first time, in a state where the second mode is set, setting the electronic device to a more power-saving mode than the second mode.

6. An electronic device comprising:
a communication module including an antenna for wirelessly communicating with an external device;
a setting interface configured to selectively set the electronic device to either a first mode or a second mode which is different from the first mode and in which the electronic device wirelessly communicates at least with the external device; and
at least one processor,
wherein the at least one processor is configured to perform:
in response to no input operation to the electronic device being received for a first time in a state where the first mode is set, processing of setting the electronic device to a more power-saving mode than the first mode; and
in response to no input operation to the electronic device being received for a second time, which is longer than the first time, in a state where the second mode is set, processing of setting the electronic device to a more power-saving mode than the second mode.
